## Europäisches Patentamt
## European Patent Office
## Office européen des brevets

(11) Publication number: **0 237 209**
**A2**

(12) # EUROPEAN PATENT APPLICATION

(21) Application number: **87301399.9**

(22) Date of filing: **18.02.87**

(51) Int. Cl.³: **G 02 B 6/28**

(30) Priority: **12.03.86 CA 503969**

(43) Date of publication of application:
**16.09.87 Bulletin 87/38**

(84) Designated Contracting States:
**AT DE FR GB NL SE**

(71) Applicant: NORTHERN TELECOM LIMITED
600 de la Gauchetiere Street West
Montreal Quebec H3B 4N7(CA)

(72) Inventor: Hvezda, Jaroslav Marius
31 Bedale Drive
Nepean Ontario, K2H 5M2(CA)

(72) Inventor: Dalgleish, Jack Frank
264 Bayswater Avenue
Ottawa Ontario, K1Y 2H1(CA)

(74) Representative: Crawford, Andrew Birkby et al,
A.A. THORNTON & CO. Northumberland House 303-306
High Holborn
London WC1V 7LE(GB)

(54) **Tapped optical conductor.**

(57) An optical conductor, such as may be used for distributing light signals to a plurality of circuit cards mounted perpendicular to a backplane upon which the optical conductor is mounted, comprises an elongate member (10) having a cavity (12) extending along its length. A plurality of reflectors (22, 24, 26) are spaced apart along one side of the cavity. A plurality of ports (18) are spaced apart along the opposite side of the cavity so as to register with the plurality of reflectors. The arrangement is such that light travelling along the cavity will be reflected to emerge from each port. The elongate member (10) may be in at least two parts, one being a rail (40) having a groove (42) in one face (43) and the other being a capping member (32), conveniently providing at least one port (48), which is mounted over the groove (42) to close it and form the required cavity.

## Background to the Invention

This invention relates to optical conductors or busbars such as may be used for distributing light signals to a plurality of circuit cards mounted to protrude perpendicularly from a backplane upon which the optical conductor is mounted.

## Summary of the Invention

According to the present invention, such an optical conductor comprises an elongate member having a cavity extending for at least a major part of its length. A plurality of reflectors are spaced apart along one side of the cavity and a plurality of ports spaced apart, conveniently along the opposite side of the cavity, in register with said plurality of reflectors. The arrangement is such that light travelling along the cavity will be reflected to emerge from each port. Conversely, light entering the cavity from a port will be reflected to travel along the cavity.

The cavity may be gas filled or filled with a castable synthetic plastics material, for example polymer, or liquid, to protect the channel surfaces against contamination, for example by oxidation. Also, such a solid or liquid filler would ensure total internal reflection at the port for a greater proportion of the light.

The elongate member may comprise a unitary tubular member formed, for example, by moulding. The cavity and its reflectors, and the ports, might then be formed by suitable mould inserts.

Alternatively, and perhaps preferably, the elongate member

1

may comprise at least two parts, one part comprising a rail having fastening means for fastening the rail to, for example, a backplane. The cavity then comprises a groove or channel opening onto one face of the rail. The second of said two parts then comprises a capping member, securable to the rail so as to fit over said cavity and having at least one port to register with a reflector in the cavity.

The second part may comprise one of a plurality of capping members, say one for each reflector. Alternatively, the second part may comprise a single member having a plurality of ports spaced apart along its length.

The elongate member may comprise a moulding of synthetic plastics material, for example polycarbonate. The cavity walls, and the reflectors, may then be metallized. Each port may be provided with a lens where it enters the cavity. Preferably the lens is plano-convex with its planar surface substantially coplanar with the surface of the cavity surrounding the mouth of the port.

Alternatively the lens might be recessed and the planar surface provided by say, a window across the mouth of the port. The surface of the lens internal to the cavity may be coated by a suitable material e.g. thin metal, to enhance reflection of light travelling along the cavity incident on the planar surface at small or "grazing" angles.

The cavity may have any suitable cross-sectional shape though rectangular and triangular are preferred. A planar surface is required to avoid cylindrical distortion or lens effect and for ease of manufacture.

Brief Description of the Drawings

An embodiment of the invention will now be described by way of example only and with reference to the accompanying drawings, in which:-

Figure 1 is an endwise perspective view of an optical conductor,

Figure 2 is a cross-sectional view on the line II-II of Figure 1,

Figure 3 is a detail view of a reflector in the optical conductor,

Figure 4 is a cross-sectional view correspnding to Figure 2 but of a second embodiment, and

Figure 5 is a cross-sectional view corresponding to Figure 4 but of a modified second embodiment.

Detailed Description of a Preferred Embodiment

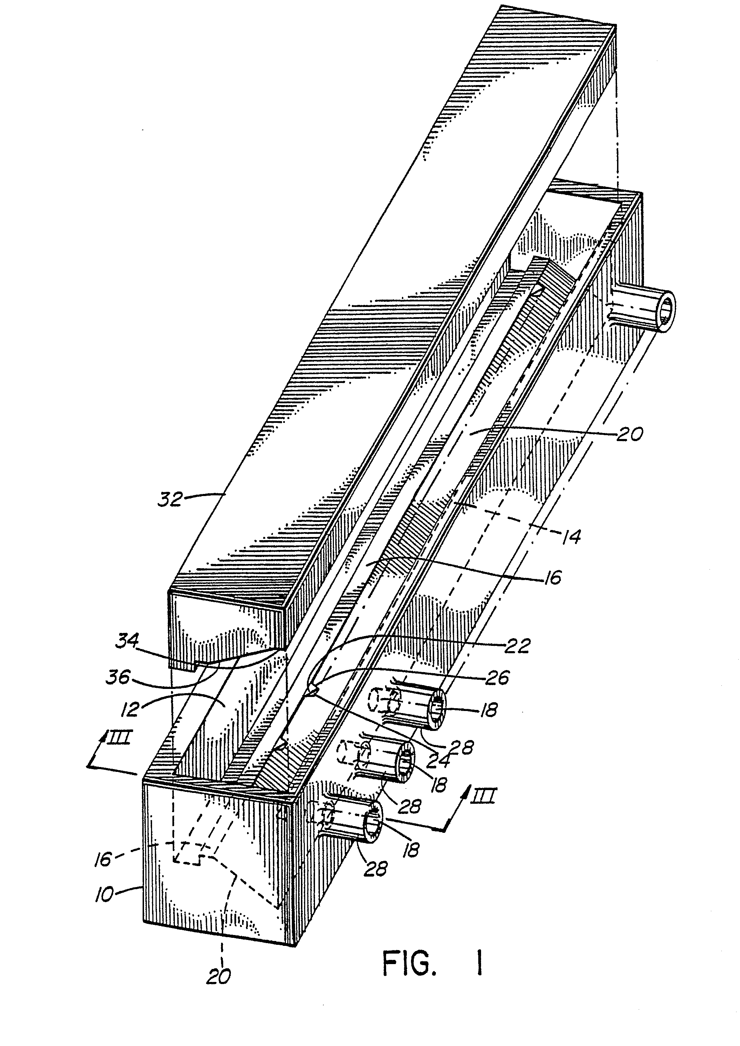

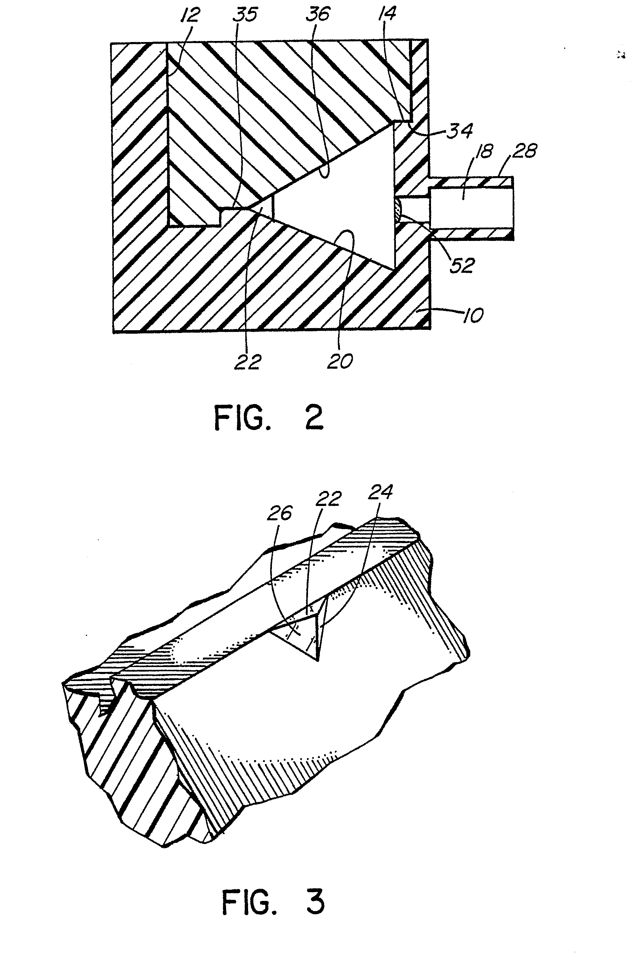

Referring to Figures 1 to 4, an optical conductor comprises a rail 10 of polycarbonate. The rail 10 is generally rectangular in cross-section and has a groove or channel 12 in one face - shown uppermost in Figure 1. The bottom of the groove or channel 12 is stepped to provide several distinct levels. The first step, nearest the surface and adjacent one side, provides a shoulder 14. The second step provides a shoulder 16 which, as shown in Figure 2, aligns with the axes of a plurality of exit ports 18 which are spaced apart along the sidewall of the groove 12, beneath the shoulder 14.

Between the two shoulders 14 and 16, the bottom of the groove 12 is inclined, forming a ramp 20 which slopes downwards away from the second shoulder 16. At the junction between shoulder 16 and ramp 20 a plurality of faceted protruberances 22 are formed. As shown

3

more clearly in Figure 3, each protruberance is generally prismatic in form and presents two planar reflector surfaces 24 and 26 towards the centre of the groove 12. The protruberances 22 are spaced apart along the length of the groove 12 in register with the ports 18. The reflector surfaces 24 and 26 are so inclined that light travelling along the optical conductor, impinging upon the reflector surface 24 or 26, will be reflected to emerge through the associated one of the ports 18. The reflector surfaces 24 and 26 are inclined at 45° to the axes of the cavity and the ports, respectively.

As can be seen from Figures 1 and 2, the ports 18 each comprise a hole extending from the groove 12 through the side of the rail 10 to emerge through a cylindrical boss 28. Each boss 28 serves to locate a corresponding spigot (not shown) on a circuit card or the like (not shown) to couple the port 18 to a light receiver (not shown). Obviously, instead of a light receiver, a light transmitter could be provided to emit a light signal which would enter the port 18 and be reflected by the reflector surface 24 or 26 to travel along the optical conductor.

At its interior end, port 18 is closed by a lens 52. The surface of the lens 52 presented to the interior of the groove 12 may be coated to enhance reflection of light impinging at small angles. The surface of the ramp 20 and adjacent sidewall of the groove 12, beneath shoulder 14, are metallized, for example with gold or aluminum, to maximize internal reflection of the light travelling along the groove 12. A closure or capping member in the form of a bar 32 is adapted to fit into the groove 12. The bar 32 is stepped to provide two shoulders 34 and 35 to abut shoulders 14 and 16, respectively.

4

Its lowermost surface is bevelled as at 36 between the shoulders 34 and 35. The bevel 36 cooperates with the ramp 20 and the sidewall of the groove to form a cavity with a triangular cross-section (see Figure 2). The bevel 36 is also metallized to reflect light. The triangular cavity thus serves as an optical waveguide.

The rail 10 has a row of pins or spigots 38, (Figure 2) protruding from its side opposite to the ports 18, for securing the rail 10 to a backplane or the like. Alternatively, a row of tapped holes might be provided to receive screws to fasten the optical conductor to the backplane, or the like.

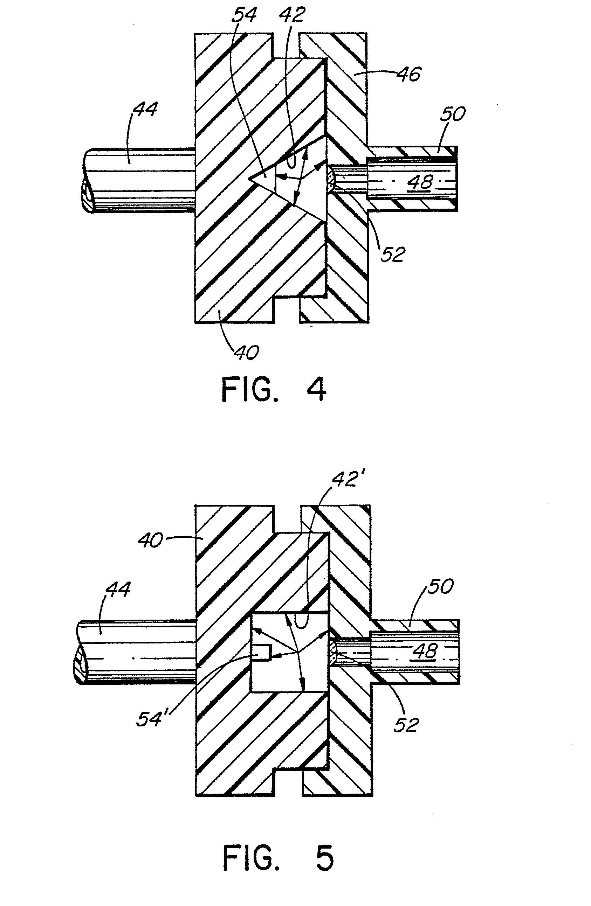

Figure 4 shows a second embodiment comprising a rail 40 of generally rectangular cross-section having a triangular cross-section groove 42 in its one face 43. A plurality of spigots 44 protrude from the opposite face for securing the rail 40 to a backplane or the like. A capping member 46 is releasably secured to the first-mentioned face 43 of the rail 40 so as to cover the groove 42. The capping member 46 has a plurality of ports 48 (only one shown) spaced apart along its length. Each port 48 comprises a hole extending through the capping member 46 from its surface adjacent the groove 42 to emerge through a boss 50 which serves the same purpose as in the first embodiment, i.e. to couple to a light receiver or transmitter on an associated circuit card, or the like.

The interior end of port 18 is again closed by a (plano-convex) lens 52, the optical axis of which is aligned with a reflector surface 54 formed, as in the first embodiment, on a protruberance in the apex of the triangular cavity furthest away from the surface of the rail 40. The internal surfaces of the cavity are

5

1

02372091111111111

metallized as before. If desired, the lenses might be coated as mentioned previously.

Figure 5 shows a modification of the embodiment of Figure 4, differing only in that the cavity has a rectangular, specifically square, cross-section. Otherwise all other parts correspond to Figure 5 and hence have the same reference numerals.

Various modifications are possible without departing from the scope of the present invention. For example, instead of a synthetic plastics rail metallized to provide the necessary reflectance, the whole rail could be made of metal. Instead of being air-filled, the cavity could be filled with a gas (e.g. nitrogen), castable polymer or with liquid.

An advantage of those embodiments of the invention which involve a row of reflectors in a straight line in the same surface of the cavity, is that masking or "shadowing" of one reflector by the preceding reflector or reflectors is not a significant problem because of the multimode transmission of the light along the cavity. In the specific embodiment, the reflectors were spaced about 22 mm, and about 0.3 mm deep, giving a spacing to depth ratio of about 73. These dimensions are especially efficacious when the cavity is filled with a suitably light-transmissive plastics material, e.g. epoxy resin, which gives a dispersion of about 15 degrees without coating of the interior of the cavity.

6

metallized as before. If desired, the lenses might be coated as mentioned previously.

Figure 5 shows a modification of the embodiment of Figure 4, differing only in that the cavity has a rectangular, specifically square, cross-section. Otherwise all other parts correspond to Figure 5 and hence have the same reference numerals.

Various modifications are possible without departing from the scope of the present invention. For example, instead of a synthetic plastics rail metallized to provide the necessary reflectance, the whole rail could be made of metal. Instead of being air-filled, the cavity could be filled with a gas (e.g. nitrogen), castable polymer or with liquid.

87

CLAIMS:

1.  An optical conductor characterized by:-

an elongate member (10, 40) having a cavity (12, 42) extending along its length;

a plurality of reflectors (22, 24, 26, 42, 54) spaced apart along one side of the cavity (12, 42);

a plurality of ports (18, 48) spaced apart along the cavity (12, 42) and in register with the reflectors (22, 24, 26, 42, 54), the arrangement being such that light travelling along the cavity will be reflected by each reflector to emerge from the associated port.

2.  An optical conductor as defined in claim 1, wherein said plurality of reflectors (22, ,24, 26, 42, 54) are arranged rectilinearly and substantially parallel with the longitudinal axis of said cavity (12, 42).

3.  An optical conductor as defined in claim 1 or 2, wherein said elongate member comprises at least two parts, one part comprising a rail (10, 40) having a groove (12, 42) opening onto one face of the rail, the second part comprising a capping member (32, 46) securable to close said groove (12, 42) to form said cavity.

4.  An optical conductor as defined in claim 3, wherein said capping member (46) has at least one said port (48) to register with a corresponding reflector in said cavity.

5. An optical conductor as defined in claim 4, wherein said capping member (46) has a plurality of ports (48) to register with the corresponding plurality of reflectors (54) in said cavity.

6. An optical conductor as defined in claim 1, 2 or 4 wherein the elongate member is of non-metallic material and the surfaces of the cavity are metallized.

7. An optical conductor as defined in claim 1, 2 or 4, wherein said plurality of ports are in the opposite sidewall of the groove.

8. An optical conductor as defined in claim 5, wherein said plurality of ports are in the opposite sidewall of the groove.

9. An optical conductor as defined in claim 6, wherein said plurality of ports are in the opposite sidewall of the groove.

10. An optical conductor as defined in claim 1, 2 or 4, wherein the or each port has a lens (52) extending across it.

11. An optical conductor as defined in claim 5 or 8, wherein the or each port has a lens (52) extending across it.

12. An optical conductor as defined in claim 6, wherein the or each port has a lens (52) extending across it.

13.   An optical conductor as defined in claim 7, wherein the or each port has a lens (52) extending across it.

14.   An optical conductor as defined in claim 9, wherein the or each port has a lens (52) extending across it.

15.   An optical conductor as defined in claim 12, 13, or 14, wherein said lens (52) has a planar surface substantially coplanar with the surrounding surface of said cavity.

16.   An optical conductor as defined in claim 3, wherein said plurality of ports (18) are in the side wall of the groove.

17.   An optical conductor as defined in claim 3, wherein the or each port has a lens (52) extending across it.

0237209

FIG. I

0237209

FIG. 2

FIG. 3

0237209

FIG. 4

FIG. 5